# EUROPÄISCHE PATENTSCHRIFT

(11) **EP 2 653 710 B1**
(45) Veröffentlichungstag und Bekanntmachung des Hinweises auf die Patenterteilung: **18.05.2016**
(21) Anmeldenummer: 13158740.4
(22) Anmeldetag: 12.03.2013
(51) Int. Cl.: F02M 26/00, F16K 1/52

(54) **Ventilvorrichtung für eine Verbrennungskraftmaschine**
Valve device for a combustion engine
Dispositif de soupape pour un moteur à combustion interne

(30) Priorität: 17.04.2012 DE 102012103311
(43) Veröffentlichungstag der Anmeldung: 23.10.2013
(73) Patentinhaber: Pierburg GmbH, 41460 Neuss (DE)
(72) Erfinder: Bronischewski, Bernhard, 47829 Krefeld (DE)
(74) Vertreter: Patentanwälte ter Smitten Eberlein Rütten Partnerschaftsgesellschaft

(56) Entgegenhaltungen:
- EP-A1- 2 236 871
- AT-U1- 3 762
- DE-A1- 2 901 703
- US-A- 5 673 895

## Beschreibung

Die Erfindung betrifft eine Ventilvorrichtung für eine Verbrennungskraftmaschine mit einem Gehäuse, welches einen Kanal begrenzt, einem Ventilkörper, der im Kanal drehbar angeordnet ist und einer Welle, auf der der Ventilkörper befestigt ist und welche im Gehäuse gelagert ist, wobei der Ventilkörper im Querschnitt zur Drehachse einen sich über mindestens 90° erstreckenden ersten Abschnitt aufweist, in welchem sein Radius um die Drehachse spiralförmig wächst.

Ventilvorrichtungen werden in Verbrennungskraftmaschinen genutzt, um Abgas- oder Luftmengen zu regeln, die abgeführt oder der Verbrennung zugeführt werden sollen. Hier sind insbesondere Abgasrückführventile, Drosselklappen oder auch Abgasklappen oder Klappen zur Wärmerückgewinnung bekannt. Auch Kombinationen dieser Ventilvorrichtungen, bei denen zwei Ventilkörper über eine gemeinsame Stellvorrichtung betätigt werden, sind bekannt. Hier ist insbesondere die Kombination eines Abgasrückführventils mit einer Drosselklappe oder einer Abgasklappe zu nennen, wobei zur Erhöhung einer möglichen Abgasrückführrate bei Öffnung des Abgasrückführkanals der Abgaskanal oder der Luftkanal geschlossen werden, um das Druckgefälle im Abgasrückführkanal zu steigern.

Die stetig wachsenden Anforderungen an die Genauigkeit der zu regelnden Gasmengen zur Einhaltung der Schadstoffnormen hat dazu geführt, dass verschiedene Ansätze bekannt geworden sind, mit denen auch bei geringen Öffnungsquerschnitten der Klappen beziehungsweise der Ventile eine möglichst exakte Mengenregelung erreicht werden soll.

So wird in der DE-OS 29 01 703 eine Ventilvorrichtung mit einem Luftansaugkanal und einem in diesen Kanal mündenden Abgasrückführkanal beschrieben, bei dem ein Klappenkörper exzentrisch an einer in dem Kanal bildenden Gehäuse gelagerten Welle befestigt ist. Bei Drehung der Welle wird der Durchströmungsquerschnitt des einen Kanals geöffnet, während der des jeweils anderen Kanals geschlossen wird. Um eine möglichst genaue Regelung des zurückgeführten Abgasstromes zu gewährleisten ist an der zum Abgasrückführkanal gerichteten Seite des Klappenkörpers ein Reduzierkörper ausgebildet, der den freien Durchströmungsquerschnitt bei geringen Öffnungswinkeln des Abgasrückführkanals im Vergleich zu einer Verwendung des reinen Klappenkörpers verringert und so die Regelbarkeit verbessert.

Die Wiedergabe einer genauen Regelkennlinie ist mit einer derartigen Ventilvorrichtung jedoch nur sehr schwierig möglich, da die entsprechende Form des an der Klappe befestigten Körpers sehr aufwendig zu berechnen und herzustellen wäre.

Aus der AT 003 762 U1 ist ein Einlasssystem einer Brennkraftmaschine bekannt, bei dem jedem Zylinder ein Einlasskanal zugeordnet ist, in den ein Abgasrückführkanal mündet. Der Abgasrückführkanal wird an seinem Mündungsende durch ein Ventil beherrscht, dessen Schließkörper zur Drehachse spiralförmig wächst, so dass eine verbesserte Regelbarkeit erreicht wird. Jedoch muss die Drehwelle der Klappe bei dieser Ausführung außerhalb des durchströmten Querschnitts angeordnet werden, so dass die Spirale aus dem zu regelnden Querschnitt hinausgeschwenkt wird.

Es ist daher Aufgabe der Erfindung, eine Ventilvorrichtung für eine Verbrennungskraftmaschine zu schaffen, mit der eine genaue Regelbarkeit eines Gasstromes auch bei kleinen Öffnungsquerschnitten entsprechend einer vorgegebenen Kennlinie mit geringen Stellkräften erreicht werden kann.

Diese Aufgabe wird durch eine Ventilvorrichtung für eine Verbrennungskraftmaschine mit den Merkmalen des Hauptanspruchs gelöst.

Dadurch, dass die Welle durch die Mittelachse des Abgasrückführkanals verläuft und im Gehäuse gelagert ist, wobei sich an den sich über mindestens 90° erstreckenden spiralförmigen ersten Abschnitt des Ventilkörpers im Querschnitt ein zweiter auf der Welle befestigter Abschnitt stetig anschließt, wobei sich der erste und der zweite Abschnitt über insgesamt 180° erstrecken und der Ventilkörper bezüglich der Drehachse an der zum ersten Abschnitt entgegengesetzten Seite einen dritten Abschnitt aufweist, der im Wesentlichen einen kreisförmigen Querschnitt besitzt, wird ein sich gleichmäßig und stetig erweiternder Öffnungsquerschnitt durch Drehung des Ventilkörpers hergestellt, so dass je nach Differenz der an den entgegengesetzten Enden des ersten Abschnitts angeordneten Radien eine unterschiedliche Steilheit der Kennlinie hergestellt wird. So können die gewünschten Gasmengen über den gesamten Öffnungswinkelbereich sehr genau geregelt werden, was zu einer Senkung der Schadstoffemissionen der Verbrennungskraftmaschine führt. Dabei schließt sich an den sich über mindestens 90° erstreckenden spiralförmigen ersten Abschnitt des Ventilkörpers im Querschnitt ein zweiter Abschnitt an, wobei sich der erste und der zweite Abschnitt über insgesamt 180° erstrecken. Durch die stetige Ausbildung werden Querschnittssprünge, die zu Druckverlusten und plötzlichen Strömungsmengenänderungen führen könnten, zuverlässig vermieden. So kann dieser Bereich entweder die Spiralform fortsetzen oder aber mit konstantem Radius ausgeführt werden. Durch die Ausbildung des dritten Abschnitts wird beim Durchfahren des Ventilkörpers über den Verstellwinkel eine weitestgehende Abdichtung an der zum ersten Abschnitt gegenüberliegenden Seite des Ventilkörpers zwischen dem zweiten Ventilsitz und dem Ventilkörper hergestellt.

In einer weiterführenden Ausbildung der Erfindung ist am zum zweiten Abschnitt entgegengesetzten Ende des ersten Abschnitts mit dem im Querschnitt größten Radius ein absatzförmiger Vorsprung ausgebildet, mit dem der Ventilkörper im geschlossenen Zustand gegen einen an einem Gehäuseteil ausgebildeten Ventilsitz anliegt, wobei der größte Radius im Wesentlichen dem radialen Abstand der Drehachse zum Gehäuseteil entspricht, an dem der axiale Ventilsitz ausgebildet ist. So wird ein dichter Verschluss des Ventils im geschlossenen Zustand sichergestellt und gleichzeitig die Endlage definiert.

Ergänzend hierzu ist vorzugsweise am zum ersten Abschnitt entgegengesetzten Ende des zweiten Abschnitts im Querschnitt ein Absatz ausgebildet, mit dem der Ventilkörper im geschlossenen Zustand gegen einen am Gehäuseteil ausgebildeten zweiten Ventilsitz anliegt, der sich vom Gehäuseteil in den Kanal erstreckt und der an der zum ersten Ventilsitz radial entgegen gesetzten Seite ausgebildet ist. Durch diese aufgrund dieser Anordnung entstehende umlaufende Auflage auf den Ventilsitzen wird auch ein dichter Verschluss an den gegenüberliegenden Seiten hergestellt, wobei eine im Kanal angeordnete und im Gehäuse gelagerte Welle verwendet werden kann.

Vorteilhafterweise ist der Absatz an der Rückseite eines plattenförmigen Elementes ausgebildet, welches sich an den zweiten Abschnitt anschließt. So wird sowohl die Auflagefläche und damit die Dichtigkeit im geschlossenen Zustand vergrößert, als auch die zum ersten Abschnitt abgewandte Seite bei kleinen Öffnungswinkeln weitestgehend dicht gehalten, so dass die Querschnittsregelung im Bereich des ersten Abschnitts stattfindet.

In einer besonders bevorzugten Ausbildung der Erfindung ist der Ventilkörper in einer Abzweigung angeordnet, an der sich der Kanal in einen ersten Kanal und einen vom ersten Kanal unter einem Winkel abzweigenden zweiten Kanal aufteilt, wobei der Ventilkörper den Durchströmungsquerschnitt des zweiten abzweigenden Kanals beherrscht. Entsprechend kann der Ventilkörper derart im Bereich der Abzweigung angeordnet werden, dass der erste Abschnitt des Ventilkörpers angeströmt wird, was eine genaue Regelung deutlich erleichtert. Der Ventilkörper bestimmt entsprechend die Aufteilung eines ankommenden Gasstroms, wie dies beispielsweise im Abgasbereich im Bereich der Abzweigung der Abgasrückführleitung aus dem Abgaskanal erwünscht ist.

Damit gleichzeitig zur Öffnung des abzweigenden Kanals der Gegendruck des Gases im Hauptkanal erhöht wird, wodurch die durch die Abzweigung zu leitenden Mengen erhöht werden können, ist an der zum ersten und zweiten Abschnitt des Ventilkörpers entgegengesetzten Seite der Drehachse auf dem Ventilkörper ein Klappenkörper angeordnet, der den Durchströmungsquerschnitt des ersten Kanals beherrscht, so dass aus einem wachsenden freien Durchströmungsquerschnitt des ersten Kanals ein sinkender freier Durchströmungsquerschnitt des zweiten Kanals folgt.

In einer weiterführenden Ausführungsform ist im Gehäuse des ersten Kanals eine Ausnehmung ausgebildet, in der der Klappenkörper in seiner den ersten Kanal vollständig freigebenden Stellung angeordnet ist. Auf diese Weise wird ein Druckverlust im ersten Kanal bei geschlossenem zweiten Kanal vermieden, da keine störenden Einbauten vorhanden sind.

In einer weiteren Ausgestaltung weisen die Kanäle einen kreisförmigen Querschnitt auf, wobei der Ventilkörper derart geformt ist, dass der Ventilkörper im Kanal bewegbar ist. Entsprechend wird die Spirale in Richtung der Drehachse nach außen kleiner, um eine Drehung auch bei der Verwendung kosten- und strömungsgünstiger Rohre mit kreisförmigen Querschnitt sicher gewährleisten zu können.

Eine derartige Ventilvorrichtung ist somit geeignet, über den gesamten Stellbereich eine genaue Dosierung der Gasmengen zu gewährleisten. Entsprechend können optimierte gewünschte Kennlinien realisiert werden. Die Ventil- und Klappenkörper können kostengünstig im Druckgussverfahren oder aus Kunststoffteilen hergestellt werden.

Als Ausführungsbeispiel wird im Folgenden anhand der Figuren eine Ventilvorrichtung beschrieben, welche ein Kombiventil aus Abgasklappe und Abgasrückführventil ist.
Figur 1 zeigt eine Seitenansicht einer erfindungsgemäßen Ventilvorrichtung in geschnittener Darstellung bei geschlossener Abzweigung.

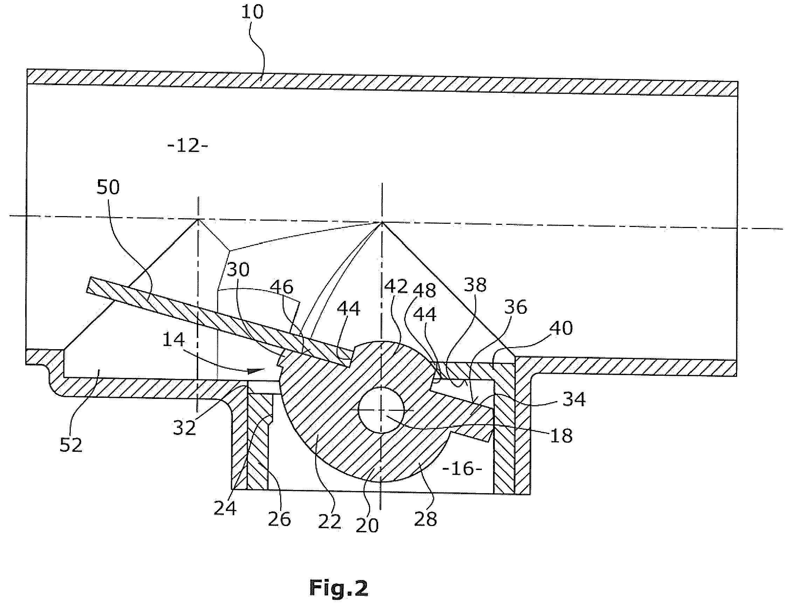

Figur 2 zeigt die Ventilvorrichtung gemäß der Figur 1 mit teilweise geöffneter Abzweigung in geschnittener Darstellung.
Figur 3 zeigt eine perspektivische Darstellung der Ventilvorrichtung gemäß der Figuren 1 und 2 mit geschnittenem Gehäuse.

Die in den Figuren dargestellte Ventilvorrichtung weist ein Gehäuse 10 auf, welches einen ersten gerade verlaufenden Kanal 12 bildet, der als Abgaskanal dient und einen von diesem Kanal 12 an einer Abzweigung 14 senkrecht wegführenden zweiten Kanal 16 bildet, der als Abgasrückführkanal dient. Beide Kanäle weisen im vorliegenden Ausführungsbeispiel einen im Wesentlichen kreisförmigen Querschnitt auf.

Unmittelbar an der Abzweigung, jedoch innerhalb des Abgasrückführkanals 16, durchsetzt eine Welle 18 an gegenüberliegenden Seiten das Gehäuse 10, so dass die Welle 18 durch die Mittelachse des Abgasrückführkanals 16 verläuft und im Gehäuse 10 gelagert ist. An einer der Seiten durchdringt die Welle 18 das Gehäuse 10 und ist an diesem nach außen weisenden Ende in bekannter Weise mit einem Aktor zur Betätigung verbunden.

Auf der Welle 18 befindet sich ein Ventilkörper 20, der den Eintrittsquerschnitt und somit den Durchströmungsquerschnitt des Abgasrückführkanals 16 beherrscht.

Erfindungsgemäß ist der Ventilkörper 20 als eine Art Walzenventil ausgeführt, welches jedoch keinen einheitlichen Durchmesser besitzt. In Höhe der Mittelachse des Abgasrückführkanals quer zur Drehachse teilt sich der Querschnitt des Ventilkörpers 20 in mehrere unterschiedlich ausgeformte Abschnitte.

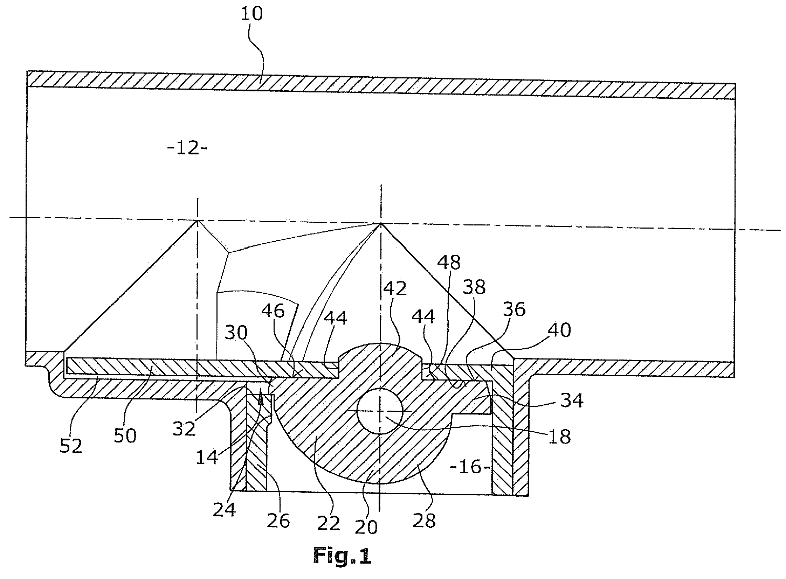

Ein erster Abschnitt 22 erstreckt sich im Wesentlichen über einen Viertelkreis und weist eine Spiralform auf. Im den Abgasrückführkanal 16 verschließenden Zustand gemäß Figur 1 weist der größte Radius dieser über 90° verlaufenden Spirale zu einer den Abgasrückführkanal 16 begrenzenden Kanalwand 24, die im vorliegenden Ausführungsbeispiel durch einen als Gehäuseteil dienenden Rohreinsatz 26 gebildet ist. Dabei entspricht dieser größte Radius des ersten Abschnitts 22 im Wesentlichen dem Innenradius dieses Rohreinsatzes 26.

An diesen ersten Abschnitt 22 schließt sich am Ende mit dem kleinsten Radius ein zweiter Abschnitt 28 an, der Vierteilkreisförmig ausgebildet ist, wobei der Viertelkreis den gleichen Radius aufweist, wie der kleinste Radius des spiralförmigen Abschnitts 22.

Am entgegengesetzten Ende des ersten Abschnitts 22, also am Ende mit dem größten Radius, schließt sich ein absatzförmiger Vorsprung 30 an, der im geschlossenen Zustand des Ventilkörpers 20 auf dem Ende des Rohreinsatzes 26 axial aufliegt, so dass dieses Ende einen ersten Ventilsitz 32 bildet.

Um etwa 180° versetzt zu diesem Vorsprung 30 befindet sich ein plattenförmiges Element 34, welches sich vom zweiten Abschnitt 28 aus in zum Vorsprung 30 entgegengesetzter Richtung und im geschlossenen Zustand bis zur Kanalwand 24 erstreckt. Eine Rückseite 36 des plattenförmigen Elementes 34 liegt gegen einen zweiten Ventilsitz 38 an, der an einer sich radial in den Abgasrückführkanal 16 erstreckenden Wand 40 am Ende des Rohreinsatzes 26 gebildet wird.

An dieses plattenförmige Element 34 schließt sich in Umfangsrichtung um die Drehachse betrachtet ein im geschlossenen Zustand zum Abgaskanal 12 weisender dritter Abschnitt 42 an, welcher wiederum teilkreisförmig ist und einen Radius aufweist, der dem Abstand zum Ende des zweiten Ventilsitzes entspricht. Dieser dritte Abschnitt 42 wird im Querschnitt an beiden Seiten durch senkrecht zur Oberfläche des plattenförmigen Elementes 34 verlaufende Wände 44 begrenzt, so dass zwischen der Rückseite 36 des plattenförmigen Elementes 34 und dem Abschnitt 42, aber auch zwischen einer Rückseite 46 des absatzförmigen Vorsprungs 30 und dem Abschnitt 42, jeweils ein Absatz 48 gebildet wird. Die Rückseite 46 des absatzförmigen Vorsprungs 30 und die Rückseite 36 des plattenförmigen Elementes 34 sind in einer gemeinsamen Ebene angeordnet.

Auf der Rückseite 46 des absatzförmigen Vorsprungs 30 ist ein Klappenkörper 50 angeordnet, der entsprechend ebenfalls mit der Welle 18 bei Betätigung des Aktors gedreht wird. Dieser Klappenkörper 50 liegt im geschlossenen Zustand des Abgasrückführkanals in einer Ausnehmung 52, welche im Gehäuse 10 im ersten Kanal ausgebildet ist, so dass in diesem Bereich der Kanal 12 von seiner Kreisform abweicht. Der Klappenkörper 50 weist ungefähr eine Kreisform auf, so dass bei einer Drehung der Welle 18 um etwa 80° ein Verschluss des ersten Kanals 12 durch den Klappenkörper 50 erfolgt.

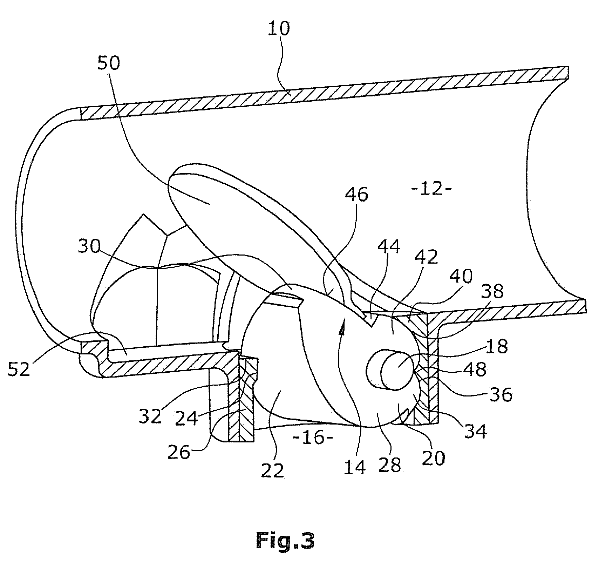

In Figur 3 ist die vollständige Form des Ventilkörpers 20 ersichtlich. Da der Rohreinsatz 26 eine runde Querschnittsform aufweist und der Ventilkörper 20 drehbar sein muss, verkleinert sich im Querschnitt die Spiralform des Ventilkörpers 20 ab einem bestimmten Abstand vom Schnittpunkt der Mittelachse des Kanals und der Drehachse. Der absatzförmige Vorsprung 30 ist entsprechend lediglich in einem zur Mittelachse nahen Bereich ausgebildet, in dem auch die Spiralform weitestgehend konstant ausgebildet ist, so dass hier ein geringer Abstand im geschlossenen Zustand zur Kanalwand 24 besteht.

Wird die Welle 18 ausgehend von ihrer in Figur 1 dargestellten Position gedreht, verlässt sowohl der absatzförmige Vorsprung 30 als auch das plattenförmige Element 34 ihre Ventilsitze 32, 38. Abgas kann lediglich in kleinen Mengen zwischen dem ersten Ventilsitz 32 und dem absatzförmigen Vorsprung 30 hindurch in den Abgasrückführkanal 16 strömen, da der freigegebene Querschnitt sehr klein und damit der Strömungswiderstand sehr hoch ist. Der Abgaskanal wird gleichzeitig geringfügig durch den Klappenkörper geschlossen, so dass der Abgasgegendruck geringfügig erhöht wird. Im Bereich des zweiten Ventilsitzes entsteht eine vernachlässigbar kleine Strömung, da der dritte Abschnitt 42 entlang der sich in den Kanal 16 erstreckenden Wand 40 bewegt, so dass lediglich sehr kleine Spalten entstehen.

Je weiter die Welle 18 gedreht wird, desto größer wird der Abstand zwischen dem spiralförmigen Abschnitt 22 des Ventilkörpers 20 und der Kanalwand 24, so dass der freigegebene Querschnitt in steigendem Maße wächst, während gleichzeitig der Abgasgegendruck durch das Schließen des Kanals 12 durch den Klappenkörper 50 stetig erhöht wird, bis schließlich der Klappenkörper 50 am Gehäuse 10 anliegt und der Abgaskanal 12 vollständig verschlossen ist, so dass der gesamte Abgasstrom durch den Abgasrückführkanal geführt wird.

Durch diese Ausführung werden bei kleinen Drehungen im Vergleich zu sonst verwendeten Klappenkörpern durch den Ventilkörper 20 lediglich sehr geringe Änderungen des Durchströmungsquerschnittes vorgenommen. Dadurch wird erreicht, dass in diesem Bereich die Mengenregelung deutlich feiner möglich ist. Je nach Steilheit der Spirale lassen sich so verschiedene Kennlinien verwirklichen, durch die die Regelbarkeit des rückgeführten Abgasstromes deutlich verbessert wird.

Es sollte deutlich sein, dass der Schutzbereich nicht auf das beschriebene Ausführungsbeispiel begrenzt ist. Insbesondere können entsprechende Querschnittsformen auch für eckige Kanäle verwendet werden. Auch kann, wie bereits angedeutet, die Steilheit der Spirale oder auch die Lage der Drehachse verändert werden, ohne den Schutzbereich des Hauptanspruchs zu verlassen.

## Patentansprüche

1. Ventilvorrichtung für eine Verbrennungskraftmaschine mit
einem Gehäuse (10), welches einen Kanal (16) begrenzt,
einem Ventilkörper (20), der im Kanal (16) drehbar angeordnet ist,
einer Welle (18), auf der der Ventilkörper (20) befestigt ist und welche im Gehäuse (10) gelagert ist, wobei der Ventilkörper (20) im Querschnitt zur Drehachse einen sich über mindestens 90° erstreckenden ersten Abschnitt (22) aufweist, in welchem sein Radius um die Drehachse spiralförmig wächst,
**dadurch gekennzeichnet, dass**
die Welle (18) durch die Mittelachse des Abgasrückführkanals (16) verläuft und im Gehäuse (10) gelagert ist, wobei sich an den sich über mindestens 90° erstreckenden spiralförmigen ersten Abschnitt (22) des Ventilkörpers (20) im Querschnitt ein zweiter auf der Welle (18) befestigter Abschnitt (28) stetig anschließt, wobei sich der erste und der zweite Abschnitt (22, 28) über insgesamt 180° erstrecken und der Ventilkörper (20) bezüglich der Drehachse an der zum ersten Abschnitt (22) entgegengesetzten Seite einen dritten Abschnitt (42) aufweist, der im Wesentlichen einen kreisförmigen Querschnitt besitzt.

2. Ventilvorrichtung für eine Verbrennungskraftmaschine nach Anspruch 1,
**dadurch gekennzeichnet, dass**
am zum zweiten Abschnitt (28) entgegengesetzten Ende des ersten Abschnitts (22) mit dem größten Radius im Querschnitt ein absatzförmiger Vorsprung (30) ausgebildet ist, mit dem der Ventilkörper (20) im geschlossenen Zustand gegen einen an einem Gehäuseteil (26) ausgebildeten Ventilsitz (32) anliegt, wobei der größte Radius im Wesentlichen dem radialen Abstand der Drehachse zum Gehäuseteil (26) entspricht, an dem der axiale Ventilsitz (32) ausgebildet ist.

3. Ventilvorrichtung für eine Verbrennungskraftmaschine nach einem der Ansprüche 1 oder 2,
**dadurch gekennzeichnet, dass**
am zum ersten Abschnitt (22) entgegengesetzten Ende des zweiten Abschnitts (28) im Querschnitt ein Absatz (48) ausgebildet ist, mit dem der Ventilkörper (20) im geschlossenen Zustand gegen einen am Gehäuseteil (26) ausgebildeten zweiten Ventilsitz (38) anliegt, der sich vom Gehäuseteil (26) in den Kanal (16) erstreckt und der an der zum ersten Ventilsitz (32) radial entgegen gesetzten Seite ausgebildet ist.

4. Ventilvorrichtung für eine Verbrennungskraftmaschine nach Anspruch 3,
**dadurch gekennzeichnet, dass**
der Absatz (48) an der Rückseite (36) eines plattenförmigen Elementes (34) ausgebildet ist, welches sich an den zweiten Abschnitt (28) anschließt.

5. Ventilvorrichtung für eine Verbrennungskraftmaschine nach einem der vorhergehenden Ansprüche,
**dadurch gekennzeichnet, dass**
der Ventilkörper (20) in einer Abzweigung (14) angeordnet ist, an der sich der Kanal (12) in einen ersten Kanal (12) und einen vom ersten Kanal (12) unter einem Winkel abzweigenden zweiten Kanal (16) aufteilt, wobei der Ventilkörper (20) den Durchströmungsquerschnitt des zweiten abzweigenden Kanals (16) beherrscht.

6. Ventilvorrichtung für eine Verbrennungskraftmaschine nach Anspruch 5,
**dadurch gekennzeichnet, dass**
an der zum ersten und zweiten Abschnitt (22, 28) des Ventilkörpers (20) entgegengesetzten Seite der Drehachse auf dem Ventilkörper (20) ein Klappenkörper (50) angeordnet ist, der den Durchströmungsquerschnitt des ersten Kanals (12) beherrscht, so dass aus einem wachsenden freien Durchströmungsquerschnitt des ersten Kanals (12) bei Drehung der Welle (18) ein sinkender freier Durchströmungsquerschnitt des zweiten Kanals (16) folgt.

7. Ventilvorrichtung für eine Verbrennungskraftmaschine nach Anspruch 6,
**dadurch gekennzeichnet, dass**
im Gehäuse (10) des ersten Kanals (12) eine Ausnehmung (52) ausgebildet ist, in der der Klappenkörper (50) in seiner den ersten Kanal (12) vollständig freigebenden Stellung angeordnet ist.

8. Ventilvorrichtung für eine Verbrennungskraftmaschine nach einem der Ansprüche 5 bis 7,
**dadurch gekennzeichnet, dass**
die Kanäle (12, 14) einen kreisförmigen Querschnitt aufweisen, wobei der Ventilkörper (20) derart geformt ist, dass der Ventilkörper (20) im Kanal (14) bewegbar ist.

## Claims

1. Valve device for an internal combustion engine, comprising
a housing (10) defining a channel (16),
a valve body (20) which is rotatable in the channel (16),
a shaft (18) on which the valve body (20) is mounted and which is supported in the housing (10), wherein, in cross section with respect to the axis of rotation, the valve body (20) has a first portion (22) extending over at least 90°, in which the radius thereof increases in a spiral shape around the axis of rotation,
**characterized in that**
the shaft (18) extends through the centre axis of the exhaust gas recirculation channel (16) and is supported in the housing (10), wherein the spiral-shaped first portion (22) of the valve body (20) extending over at least 90° is continuously adjoined, in cross section, by a second portion (28) mounted on the shaft (18), wherein the first and the second portion (22, 28) extend over a total of 180° and the valve body (20) has a third portion (42) opposite to the first portion (22) with respect to the axis of rotation, the third portion having a substantially circular cross section.

2. Valve device for an internal combustion engine as recited in claim 1, **characterized in that** at the end of the first portion (22) opposite the second portion (28) and having the largest radius, a shoulder-like protrusion (30) is formed, seen in cross section, by which the valve body (20), when in the closed state, abuts against a valve seat (32) formed at a housing portion (26), wherein the largest radius substantially corresponds to the radial distance of the axis of rotation to the housing portion (26) at which the axial valve seat (32) is formed.

3. Valve device for an internal combustion engine as recited in one of claims 1 or 2, **characterized in that** at the end of the second portion (28) opposite the first portion (22) a shoulder (48) is formed, seen in cross section, by which the valve body (20), when in the closed state, abuts against a second valve seat (38) formed at a housing portion (26), which valve seat extends from the housing portion (26) into the channel (16) and which is formed on the side radially opposite the first valve seat (32).

4. Valve device for an internal combustion engine as recited in claim 3, **characterized in that** the shoulder (48) is formed o the rear side (36) of a plate-shaped element (34) adjoining the second portion (28).

5. Valve device for an internal combustion engine as recited in one of the preceding claims, **characterized in that** the valve body (20) is arranged in a branch (14) at which the channel (12) splits into a first channel (12) and a second channel (16) branching at an angle from the first channel (12), wherein the valve body (20) controls the flow cross section of the second, branching channel (16).

6. Valve device for an internal combustion engine as recited in claim 5, **characterized in that** on the side of the axis of rotation opposite the first and second portions (22, 28) of the valve body (20), a flap body 50) is arranged on the valve body (20), which flap body controls the flow cross section of the first channel (12) so that, upon a rotation of the shaft (18), an increasing free flow cross section of the first channel (12) is followed by a decreasing free flow cross section of the second channel (16).

7. Valve device for an internal combustion engine as recited in claim 6, **characterized in that** a recess (52) is formed in the housing (10) of the first channel (12), in which recess the flap body (50) is arranged when in its position fully opening the first channel (12).

8. Valve device for an internal combustion engine as recited in one of claims 5 to 7, **characterized in that** the channels (12, 14) are circular in cross section, wherein the valve body (20) is shaped such that the valve body (20) is movable in the channel (14).

## Revendications

1. Dispositif de soupape pour moteur à combustion interne, avec
un boitier (10) délimitant un canal (16),
un corps de soupape (20) agencé de manière rotative dans le canal (16),
un arbre (18) sur lequel est monté ledit corps de soupape (20) et qui est supporté dans ledit boitier (10), ledit corps de soupape (20) comportant, vu en section transversale par rapport à l'axe de rotation, une première partie (22) s'étendant sur au moins 90°, le rayon de celle-ci croissant en spirale autour l'axe de rotation,
**caractérisé en ce que**
l'arbre (18) s'étend à travers l'axe central du canal de recirculation des gaz d'échappement (16) et est supporté dans le boitier (10), la première partie en spirale (22) du corps de soupape (20), qui s'étend sur au moins 90°, est suivie, vu en section transversale, continûment par une deuxième partie (28) montée sur l'arbre (18), ladite première partie et ladite deuxième partie (22, 28) s'étendant, au total, sur 180° et ledit corps de soupape (20) comprenant une troisième partie (42) opposée à la première partie (22) par rapport a l'axe de rotation, ladite troisième partie ayant une section transversale sensiblement circulaire.

2. Dispositif de soupape pour moteur à combustion interne selon la revendication 1, **caractérisé en ce qu'**à l'extrémité de la première partie (22) opposée à la deuxième partie (28) et ayant le rayon le plus grand, une saillie (30) en forme d'un épaulement est formée, vu en section transversale, par laquelle saillie le corps de soupape (20) reste, en état fermé, contre une siège de soupape (32) formée sur une partie (26) du boitier, le plus grand rayon correspondant sensiblement à la distance radiale de l'axe de rotation à la partie (26) du boitier sur laquelle siège de soupape (32) axiale est formée.

3. Dispositif de soupape pour moteur à combustion interne selon l'une des revendications 1 ou 2, **caractérisé en ce qu'**à l'extrémité de la deuxième partie (28) opposée à la première partie (22), un épaulement (48) est formé, vu en section transversale, par lequel le corps de soupape (20) reste, en état fermé, contre une deuxième siège de soupape (38) formée sur la partie (26) du boitier, ladite siège s'étendant à partir de la partie (26) du boitier dans le canal (16) et étant formée sur le côté radialement opposé à la première siège de soupape (32).

4. Dispositif de soupape pour moteur à combustion interne selon la revendication 3, **caractérisé en ce que** l'épaulement (48) est formé sur la face arrière (36) d'un élément (34) en forme de plaque qui suit la deuxième partie (28).

5. Dispositif de soupape pour moteur à combustion interne selon l'une quelconque des revendications précédentes, **caractérisé en ce que** le corps de soupape (20) est disposé dans une branche (14) à laquelle ledit canal (12) est divisé en un premier canal (12) et un deuxième canal (18) qui branche du premier canal (12) sous un angle, ledit corps de soupape (20) contrôlant la section transversale d'écoulement du deuxième canal (16) de branche.

6. Dispositif de soupape pour moteur à combustion interne selon la revendication 5, **caractérisé en ce qu'**un corps de clapet (50) est disposé sur le côté de l'axe de rotation opposé à la première et la deuxième partie (22, 28) du corps de soupape (20), ledit corps de clapet contrôlant la section transversale d'écoulement du premier canal (12), de sorte que, lors d'une rotation de l'arbre (18), la section transversale d'écoulement libre croissant du premier canal (12) est suivie par une section transversale d'écoulement libre décroissant du deuxième canal (16).

7. Dispositif de soupape pour moteur à combustion interne selon la revendication 6, **caractérisé en ce qu'**un renfoncement (52) est formé dans ledit boitier (10) du premier canal (12), dans lequel renfoncement le corps de clapet (50) est logé dans sa position de libération totale du premier canal (12).

8. Dispositif de soupape pour moteur à combustion interne selon l'une des revendications 5 à 7, **caractérisé en ce que** les canaux (12, 14) ont une section transversale circulaire, ledit corps de soupape (20) étant formé d'une manière que le corps de soupape (20) soit mobil dans le canal (14).
